# EUROPEAN PATENT APPLICATION

(11) **EP 4 560 879 A1**
(43) Date of publication of application: **28.05.2025**
(21) Application number: 23864943.8
(22) Date of filing: 15.02.2023
(51) Int. Cl.: H02J 50/80, H02J 7/00, H02J 50/20, H02J 50/40, H04B 7/06, H04W 16/28, H04W 72/20, H04W 84/18

(54) **SYSTEM, BASE STATION, TERMINAL DEVICE, METHOD, AND PROGRAM EXECUTING WIRELESS ELECTRIC POWER TRANSMISSION**

(30) Priority: 12.09.2022 JP 2022144638
(71) Applicant: Softbank Corp., Tokyo 105-7529 (JP)
(72) Inventor: NAKAMOTO Yuta, Tokyo 105-7529 (JP); HASEGAWA Naoki, Tokyo 105-7529 (JP); TAKAGI Yuki, Tokyo 105-7529 (JP); HIRAKAWA Takashi, Tokyo 105-7529 (JP); OTA Yoshichika, Tokyo 105-7529 (JP)
(74) Representative: SSM Sandmair
(86) International application number: PCT/JP2023/005183
(87) International publication number: WO 2024/057576

(57) **Abstract**

It is provided of a system capable of appropriately controlling a wireless power transfer to a terminal apparatus based on feedback information from a terminal apparatus. A base station obtains feedback information from a terminal apparatus of power-supply target via an uplink of mobile communication, generates a transmission signal including a signal for wireless power transfer and a control signal of beamforming for wireless power transfer from an antenna of the base station, based on control information generated based on the feedback information, controls a beam for wireless power transfer from the antenna based on the control signal, and transmits the transmission signal including the signal for wireless power transfer to the terminal apparatus via the beam for wireless power transfer from the antenna. The terminal apparatus receives the transmission signal including the signal for wireless power transfer that is transmitted from the base station, and outputs an electric power of a reception signal that is obtained by receiving the transmission signal including the signal for wireless power transfer.

## Description

### TECHNICAL FIELD

The present invention relates to a system, a base station, a terminal apparatus, a method and a program, which are capable of performing a wireless power transfer (WPT).

### BACKGROUND ART

There is conventionally known a communication system for performing a communication between a base station and a terminal apparatus using at least some of plural radio resources that are set in a radio frame (for example, see Patent Literature 1).

### CITATION LIST

### PATENT LITERATURE

Patent Literature 1: International Publication No. 2017/164220.

### SUMMARY OF INVENTION

### TECHNICAL PROBLEM

In the conventional communication system, as a terminal apparatus that connects to and communicates with a base station, there is a portable terminal apparatus that mainly uses electric power supplied from a built-in battery. In this terminal apparatus, the cumbersome task of charging the built-in battery is required when the remaining charge in the built-in battery becomes low. Furthermore, a terminal apparatus that uses electric power supplied from a wired power line rather than from the built-in battery are limited to use in a location where such a power line is available. Thus, a power supply infrastructure capable of supplying electric power to various terminal apparatuses that connect to and communicate with a base station has not yet been developed.

In the fifth generation and subsequent next generation mobile communication systems, the number of terminal apparatuses (for example, user apparatuses, IoT devices, etc.) that connect to and communicate with base stations is expected to increase rapidly, and a development of communication infrastructure to handle the huge amount of traffic is underway. However, a power supply infrastructure capable of supplying electric power to the enormous number of terminal apparatuses that perform the foregoing communications remains underdeveloped.

A system of wireless power transfer (WPT) is investigated as a power supply infrastructure for supplying an electric power to the foregoing terminal apparatuses; however, one of the problems is to properly control the wireless power transfer (WPT) to the terminal apparatuses.

### SOLUTION TO PROBLEM

A system according to an aspect of the present invention is a system for performing a wireless power transfer from a base station. The base station comprises a communication control section that obtains feedback information regarding a wireless power transfer to a terminal apparatus, from a terminal apparatus of power-supply target via an uplink of mobile communication, and generates a transmission signal including a signal for wireless power transfer and a control signal of beamforming for wireless power transfer from an antenna of the base station, based on control information generated based on the feedback information, and a radio processing section that controls a beam for wireless power transfer from the antenna based on the control signal, and transmits the transmission signal including the signal for wireless power transfer to the terminal apparatus via the beam for wireless power transfer from the antenna. The terminal apparatus comprises a radio processing section that receives the transmission signal including the signal for wireless power transfer transmitted from the base station, and a power output section that outputs an electric power of a reception signal that is obtained by receiving the transmission signal including the signal for wireless power transfer, as a reception power.

In the foregoing system, the base station and the terminal apparatus may be capable of a radio communication with each other via an uplink of mobile communication, and the base station may receive the feedback information directly from the terminal apparatus via an uplink between the terminal apparatus and the base station.

In the foregoing system, the system may comprise a relay apparatus that is connected to the terminal apparatus via a wired or wireless communication path and is capable of performing a radio communication with the base station via an uplink of mobile communication, and the base station may receive the feedback information via an uplink between the relay apparatus and the base station.

In the foregoing system, the feedback information may include power-receiving terminal information regarding a power reception in the terminal apparatus, and the base station may generate the control information based on the power- receiving terminal information included in the feedback information.

In the foregoing system, the feedback information may include power-receiving terminal information regarding a power reception in the terminal apparatus, and the base station may transfer the feedback information including the power-receiving terminal information to an external platform, and receive the control information from the external platform that generates the control information based on the power-receiving terminal information included in the feedback information.

In the foregoing system, the feedback information may include the control information generated by the terminal apparatus based on power-receiving terminal information regarding a power reception in the terminal apparatus.

In the foregoing system, the power-receiving terminal information may include at least one of request information for requesting a wireless power transfer to the terminal apparatus, identification information capable of identifying the terminal apparatus, position information of the terminal apparatus, reception-power information in the terminal apparatus, information on a reception-power beam in the terminal apparatus, information on an arrival direction of a radio wave of wireless power transfer in the terminal apparatus, remaining charge information of a battery provided in the terminal apparatus, and approval information for approving a wireless power transfer to the terminal apparatus.

In the foregoing system, the base station may generate a transmission signal including the signal for wireless power transfer for each of plural terminal apparatuses, and transmit the transmission signal including the signal for wireless power transfer using plural beams that are different for each of the terminal apparatuses.

A base station according to another aspect of the present invention is a base station capable of performing a radio communication with a terminal apparatus of power-supply target. This base station comprises a communication control section that obtains feedback information regarding a wireless power transfer to the terminal apparatus from the terminal apparatus via an uplink of mobile communication, and generates a transmission signal including a signal for wireless power transfer and a control signal of beamforming for wireless power transfer from an antenna of the base station, based on control information generated based on the feedback information, and a radio processing section that controls a beam for wireless power transfer from the antenna based on the control signal, and transmits the transmission signal including the signal for wireless power transfer to the terminal apparatus via the beam for wireless power transfer from the antenna.

In the foregoing base station, the base station may be capable of performing a radio communication with the terminal apparatus via an uplink of mobile communication, and the base station may comprise means for directly receiving the feedback information from the terminal apparatus via an uplink between the terminal apparatus and the base station.

In the foregoing base station, the base station may be capable of performing a radio communication with a relay apparatus connected to the terminal apparatus via a wired or wireless communication path via an uplink of mobile communication, and the base station may comprise means for receiving the feedback information via an uplink between the relay apparatus and the base station.

In the foregoing base station, the feedback information may include power-receiving terminal information regarding a power reception in the terminal apparatus, and the base station may comprise means for generating the control information based on the power-receiving terminal information included in the feedback information.

In the foregoing base station, the feedback information may include power-receiving terminal information regarding a power reception in the terminal apparatus, and the base station may comprise means for transferring the feedback information including the power-receiving terminal information to an external platform, and means for receiving the control information from the external platform that generates the control information based on the power-receiving terminal information included in the feedback information.

In the foregoing base station, the feedback information may include the control information generated by the terminal apparatus based on power-receiving terminal information regarding a power reception in the terminal apparatus.

In the foregoing base station, the power-receiving terminal information may include at least one of request information for requesting a wireless power transfer to the terminal apparatus, identification information capable of identifying the terminal apparatus, position information of the terminal apparatus, reception-power information in the terminal apparatus, information on a reception-power beam in the terminal apparatus, information on an arrival direction of a radio wave of wireless power transfer in the terminal apparatus, remaining charge information of a battery provided in the terminal apparatus, and approval information for approving a wireless power transfer to the terminal apparatus.

In the foregoing base station, the base station may comprise means for generating a transmission signal including the signal for wireless power transfer for each of plural terminal apparatuses, and means for transmitting the transmission signal including the signal for wireless power transfer using plural beams different for each of the terminal apparatuses.

A terminal apparatus according to yet another aspect of the present invention is a terminal apparatus capable of performing a radio communication with a base station. This terminal apparatus comprises a radio processing section that transmits feedback information regarding a wireless power transfer to the base station via an uplink of mobile communication and receives a transmission signal including a signal for wireless power transfer transmitted from the base station, and a power output section that outputs an electric power of a reception signal that is obtained by receiving the transmission signal including the signal for wireless power transfer, as a reception power.

In the foregoing terminal apparatus, the feedback information may include the control information generated by the terminal apparatus based on power-receiving terminal information regarding a power reception in the terminal apparatus.

A method according to yet another aspect of the present invention is a method for performing a wireless power transfer from a base station. This method comprises obtaining feedback information regarding a wireless power transfer to the terminal apparatus from a terminal apparatus of power-supply target via an uplink of mobile communication, and generating a transmission signal including a signal for wireless power transfer and a control signal of beamforming for wireless power transfer from an antenna of the base station, based on control information generated based on the feedback information, by the base station, controlling a beam for wireless power transfer from the antenna based on the control signal, and transmitting the transmission signal including the signal for wireless power transfer to the terminal apparatus via a beam for wireless power transfer from the antenna, by the base station, receiving the transmission signal including the signal for wireless power transfer transmitted from the base station, by the terminal apparatus, and outputting an electric power of a reception signal that is obtained by receiving the transmission signal including the signal for wireless power transfer, as a reception power.

A program according to yet another aspect of the present invention is a program executed by a computer or processor provided in a base station capable of performing a radio communication with a terminal apparatus. This program includes a program code for obtaining feedback information regarding a wireless power transfer to the terminal apparatus, from a terminal apparatus of power-supply target via an uplink of mobile communication, and generating a transmission signal including a signal for wireless power transfer and a control signal of beamforming for wireless power transfer from an antenna of the base station, based on control information generated based on the feedback information, and a program code for controlling a beam for wireless power transfer from the antenna based on the control signal, and transmitting the transmission signal including the signal for wireless power transfer to the terminal apparatus via a beam for wireless power transfer from the antenna.

A program according to yet another aspect of the present invention is a program executed by a computer or processor provided in a terminal apparatus capable of performing a radio communication with a base station. This program includes a program code for transmitting feedback information regarding a wireless power transfer to the base station via an uplink of mobile communication and receiving a transmission signal including a signal for wireless power transfer transmitted from the base station, and a program code for outputting an electric power of a reception signal that obtained by receiving the transmission signal including the signal for wireless power transfer, as a reception power.

In the foregoing system, the foregoing base station, the foregoing terminal apparatus, the foregoing method and the foregoing program, the control information may include information regarding a beamforming control when performing a power transfer from the antenna of the base station to the terminal apparatus.

In the foregoing system, the foregoing base station, the foregoing terminal apparatus, the foregoing method and the foregoing program, a transmission signal including the signal for wireless power transfer may be generated for each of plural terminal apparatuses, and the transmission signal including the signal for wireless power transfer may be transmitted using plural beams that are different for each of the terminal apparatuses.

In the foregoing system, the foregoing base station, the foregoing terminal apparatus, the foregoing method and the foregoing program, the terminal apparatus may comprise a battery that is charged using the reception power of dummy signal.

In the foregoing system, the foregoing base station, the foregoing terminal apparatus, the foregoing method and the foregoing program, the terminal apparatus may perform a radio communication with the base station via an antenna for communication, and receive a transmission signal including the signal for wireless power transfer from the base station via an antenna for reception power.

In the foregoing system, the foregoing base station, the foregoing terminal apparatus, the foregoing method and the foregoing program, plural radio resources in the communication between the base station and the terminal apparatus may include plural resource blocks defined by subcarriers on a frequency axis and slots on a time axis.

In the foregoing system, the foregoing base station, the foregoing terminal apparatus, the foregoing method and the foregoing program, the signal for wireless power transfer, the signal for wireless power transfer may be a signal generated by modulating using a modulation method that provides a smaller PAPR (Peak to Average Power Ratio) (also called "wave height ratio") than a communication signal. For example, the signal for wireless power transfer may be a modulated signal that is modulated using a code of a Zadoff-Chu sequence and has a constant amplitude and a variable phase with respect to time. Furthermore, for example, the signal for wireless power transfer may be a signal modulated at one or plural symbol points having maximum or near maximum amplitude among plural symbol points of a digital modulation method. Herein, the primary modulation method of the transmission signal from the base station may be a QAM (Quadrature Amplitude Modulation) method and the secondary modulation method may be an OFDM (Orthogonal Frequency Division Multiplexing) method, and the dummy signal for wireless power transfer may be a signal modulated at a symbol point having the maximum amplitude among plural symbol points of the QAM method.

The program for generating the control information for the wireless power transfer from the base station to the terminal apparatus includes a learned model used for machine learning. That is, the machine learning may be used to generate the control information for wireless power transfer. For example, after constructing the learned model by using teacher data that links the information such as the location information of the terminal apparatus, the reception-power information in the terminal apparatus, the information on the reception beam, the information on the arrival direction of radio wave of the wireless power transfer in the terminal apparatus and the remaining charge information on a battery provided in the terminal apparatus, etc. with the information regarding wireless power transfer when the power is actually supplied from the base station to the terminal apparatus, and the feedback information from the terminal apparatus may be input to the foregoing learned model to generate the control information that enables a predetermined target power to be supplied to the terminal apparatus. A program using the learned model may, for example, be incorporated into the external platform.

### ADVANTAGEOUS EFFECTS OF INVENTION

According to the present invention, it is possible to appropriately control a wireless power transfer to a terminal apparatus based on feedback information from a terminal apparatus of power-supply target.

### BRIEF DESCRIPTION OF DRAWINGS

[FIG. 1] FIG. 1 is an illustration showing an example of an overall configuration of a system to which a wireless-power transfer feedback control can be applied, according to an embodiment.
[FIG. 2] FIG. 2 is an illustration showing an example of wireless-power transfer feedback control via a communication UL in the system according to the embodiment.
[FIG. 3] FIG. 3 is a block diagram showing an example of a configuration of a base station and a terminal apparatus constituting the system to which the wireless-power transfer feedback control in FIG. 2 can be applied.
[FIG. 4A] FIG. 4A is an illustration showing an example of an allocation of WPT blocks in radio resources (resource blocks) of a transmission signal including a dummy signal for WPT transmitted from the base station according to the embodiment.
[FIG. 4B] FIG. 4B is an illustration showing an example of a spectrum on a frequency axis in the secondary modulation of the OFDM method of a transmission signal transmitted from the base station according to the embodiment.
[FIG. 5A] FIG. 5A is an illustration showing an example of a placement of symbol points in the primary modulation of the QAM method of a communication signal transmitted from the base station according to the embodiment.
[FIG. 5B] FIG. 5B is an illustration showing another example of a placement of symbol points in the primary modulation of a dummy signal for WPT transmitted from the base station according to the embodiment.
[FIG. 6] FIG. 6 is an illustration showing an example of a power supply to each terminal apparatus by beamforming from the base station to plural terminal apparatuses according to the embodiment.
[FIG. 7] FIG. 7 is an illustration showing an example of an allocation of radio resources (resource blocks) of a transmission signal in the system of FIG. 6.
[FIG. 8] FIG. 8 is an illustration showing an example of a wireless-power transfer feedback control via a communication UL in a system according to another embodiment.
[FIG. 9] FIG. 9 is a block diagram showing an example of configuration of a base station, a relay apparatus and a terminal apparatus constituting the system to which the wireless-power transfer feedback control in FIG. 8 can be applied.
[FIG. 10] FIG. 10 is a flowchart showing an example of a wireless-power transfer feedback control in the system according to the embodiment.

### DESCRIPTION OF EMBODIMENTS

Hereinafter, embodiments of the present invention are described with reference to the drawings.

A system according to an embodiment described herein is a system capable of a wireless power transfer (WPT) from a base station of a mobile communication to a terminal apparatus (for example, a mobile communication UE (mobile station) or an IoT device) that is a power-supply target. The system of the embodiment is, for example, a system that effectively utilizes communication-unused radio resources (resource blocks) which are not used for communications among plural radio resources (resource blocks) set in a downlink radio frame to a terminal apparatus such as a UE, for wireless power transfer (WPT) to the terminal apparatus. The system of the embodiment may be a radio communication system between the base station and the terminal apparatus, which has a function of wireless power transfer (WPT) from the base station to the terminal apparatus. Moreover, the system of the embodiment may be a system of wireless power transfer (WPT) from the base station to the terminal apparatus, which has a radio communication function between the base station and the terminal apparatus.

In particular, in the system of the present embodiment, by feeding back reception-power terminal information (for example, reception power, location information, reception-power beam information (direction, width), information on an arrival direction of WPT radio waves, remaining battery level, etc.) as feedback information regarding the wireless power transfer in a terminal apparatus of power-supply target to a transmission-side base station via a communication signal (for example, an uplink (UL) communication signal), and controlling the wireless power transfer from the base station (for example, direction and width of the transmission beam, transmission power, distribution of antenna elements used for power supply, etc.), based on the fed-back reception power terminal information, it is possible to appropriately supply the power through the wireless power transfer from the base station depending on the state of power-receiving side.

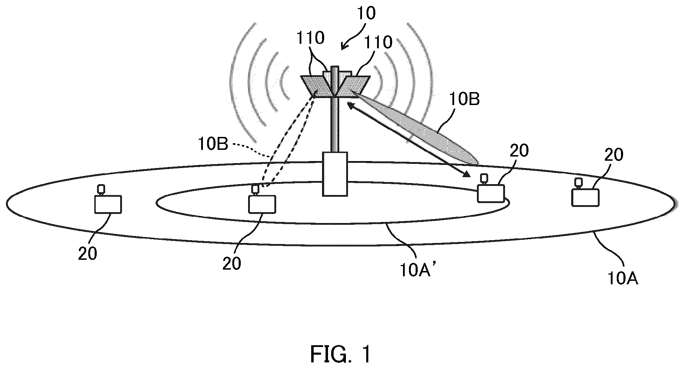

FIG. 1 is an illustration showing an example of a schematic configuration of the system according to the present embodiment. The system of the present embodiment includes a cellular base station 10 that forms a communication area (cell) 10A, and a terminal apparatus (hereinafter also referred to as "UE" (user equipment)) 20 of power-supply target which is connected to the base station 10 when locating in the communication area 10A and can communicate wirelessly with the base station 10.

The UE 20 may be a mobile station in a mobile communication system, or may be a combination of a communication apparatus (for example, a mobile communication module) and various kinds of devices. The UE 20 is provided with, for example, an array antenna having plural antenna elements. The UE 20 may be an IoT device (also called "IoT equipment"). The UE 20 may function as a relay apparatus (master repeater) that relays a communication between the base station 10 and a terminal apparatus (slave repeater) of power-supply target such as an IoT device, etc.

Furthermore, as in other configuration examples described later, the terminal apparatus of power-supply target may be an IoT device (slave repeater) connected to a relay apparatus (master repeater) such as a mobile station, etc. that relays a communication to and from the base station 10. In this case, the IoT device (slave repeater) 20 and the relay apparatus (master repeater) such as a mobile station, etc. capable of performing a radio communication with the base station 10 are connected, for example, by a wired or wireless communication path so as to enable a transmission and reception of data and information. The wired communication path is, for example, a LAN cable such as Ethernet (registered trademark), etc. The wireless communication path is, for example, a wireless communication path such as Bluetooth (registered trademark) such as BLE (Bluetooth (registered trademark) Low Energy), etc., a wireless LAN such as Wi-Fi (registered trademark), etc., or ZigBee (registered trademark), etc. The wireless communication path may also be a communication path of UWB (ultra-wideband) communication. The UWB communication is a communication technology using weak radio waves in a wide band (for example, a bandwidth of several hundred MHz centered on an arbitrary frequency in the several GHz band), and is defined in IEEE 802.15.4.

In FIG. 1, the base station 10 is provided with plural array antennas 110 having a large number of antenna elements, and can communicate with plural UEs 20 using a massive MIMO (hereinafter also referred to as "mMIMO") transmission method. The mMIMO is a radio transmission technology that realizes a large-capacity and high-speed communication by transmitting and receiving data using the array antenna 110. The communication can be performed using a MU (Multi User)-MIMO transmission method which performs a beamforming to form a beam 10B for each of the plural UEs 20 in a time-division or simultaneously. By performing the MU-MIMO transmission using a multi-element array antenna, it is possible to communicate by directing an appropriate beam to each UE 20 according to the communication environment of each UE 20, thereby improving the communication quality of the entire area of cell. Furthermore, since it is capable of communicating with plural UEs 20 using the same radio resources (time/frequency resources), the system capacity can be enhanced.

In FIG. 1, a part of the communication area 10A is a wireless-power transfer area (hereinafter referred to as "WPT area") 10A' in which a wireless power transfer is performed from the base station 10 to the terminal apparatus 20. The WPT area 10A' may be an area smaller than the communication area 10A as shown in the figure, or may be an area of the same or approximately the same size and location as the communication area 10A.

In the WPT area 10A', communication-unused radio resources (resource blocks) are utilized as wireless-power transfer blocks, which are not used for communications among the plural radio resources (time/frequency resources) constituting the downlink radio frame from the base station 10. In the downlink radio frame to the UE 20, the base station 10 generates a transmission signal in which a dummy signal for wireless power transfer (hereinafter also referred to as "dummy signal for WPT") is assigned to a wireless-power transfer block (WPT block) that is the communication-unused radio resource, and transmits the transmission signal to the UE 20.

In particular, in the fifth-generation or the later-generation mobile communication systems, a technology called as a lean carrier is proposed in which the minimum necessary reference signals (RS) and control signals are placed on only some of the subcarriers of the radio frame. It is expected that a portion of the communication-unused radio resource in the radio frame is effectively utilized to perform the wireless power transfer to the UE 20.

The radio waves of the communication signals transmitted and received between the base station 10 and the UE 20 and the radio waves of the transmission signals assigned with the dummy signal for WPT transmitted from the base station 10 to the UE 20 are, for example, millimeter waves or microwaves.

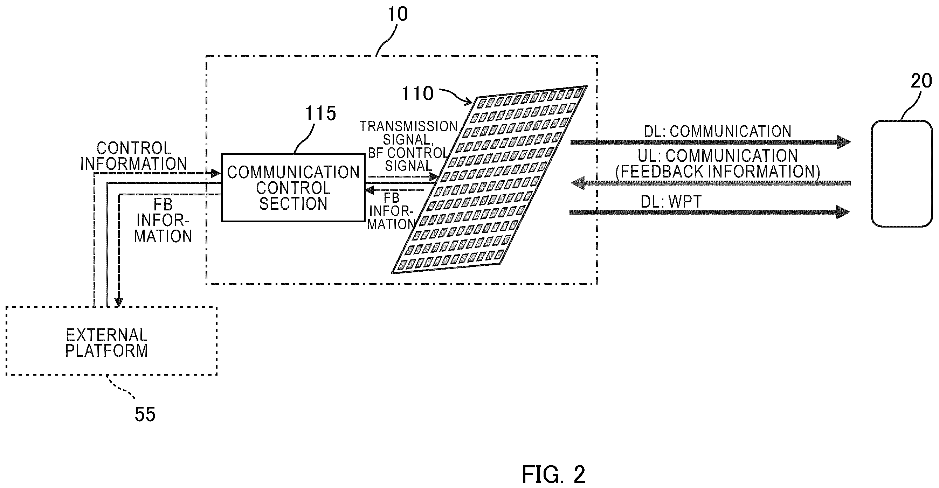

FIG. 2 is an illustration showing an example of wireless-power transfer feedback control via an uplink of communication (hereinafter also referred to as "communication UL") in the system of FIG. 1. In FIG. 2, the base station 10 directly receives and obtains feedback information regarding the wireless power transfer to the UE 20 via the communication UL established between the base station 10 and the UE 20.

The feedback information may include, for example, reception-power terminal information regarding a reception power in the terminal apparatus (UE) 20 (also referred to as "WPT reception power information", "WPT terminal information" or "WPT information"). The reception-power terminal information includes, for example, at least one of the following information: request information (WPT request) for requesting a wireless power transfer to the UE 20, identification information capable of identifying the UE 20, location information of the UE 20, reception power information in the UE 20, reception power information in the UE 20, reception-beam information in the UE 20 (for example, information such as the direction and width of the reception beam), information on an arrival direction of the WPT radio waves in the UE 20, remaining-charge information of a battery provided in the UE 20, and approval information approving a wireless power transfer to the UE 20. Herein, the information includes information on the azimuth of the antenna reception beam (the main beam in the antenna directivity characteristics) with respect to the horizontal plane passing through the antenna of the UE 20, and the information on the zenith angle or elevation angle of the antenna reception beam. The information on the arrival direction of the WPT radio wave includes information on the azimuth of the arrival direction of the WPT radio wave with respect to the horizontal plane passing through the antenna of the UE 20, and information on the zenith angle or elevation angle of the arrival direction.

Feedback information (FB information) from the UE 20, which is received by the array antenna 110 of the base station 10, is sent to the communication control section 115. The communication control section 115 generates control information based on the feedback information from the UE 20, and based on the control information, generates a downlink (DL) transmission signal including a signal for wireless power transfer (WPT signal) and a control signal (BF control signal) of beamforming for wireless power transfer (WPT beamforming) of the array antenna 110 of the base station 10, and sends them to the array antenna 110. The array antenna 110 forms a beam for wireless power transfer (WPT beam) in the direction of the UE 20 based on the BF control signal, and transmits a downlink (DL) transmission signal including the WPT signal via a part of the downlink (DL) radio resources using the WPT beam.

The communication control section 115 of the base station 10 may transfer the feedback information received from the UE 20 to a cloud system or a server, etc. of the external platform 55, receive control information that is generated by the external platform 55 based on the feedback information, and generate the downlink (DL) transmission signal including the WPT signal and the BF control signal, based on the control information.

The communication control section 115 of the base station 10 may generate the downlink (DL) transmission signal including the WPT signal and the BF control signal based on the control information included in the feedback information received from the UE 20. In this case, the control information is generated by the UE 20 based on the reception-power terminal information regarding the reception power in the UE 20.

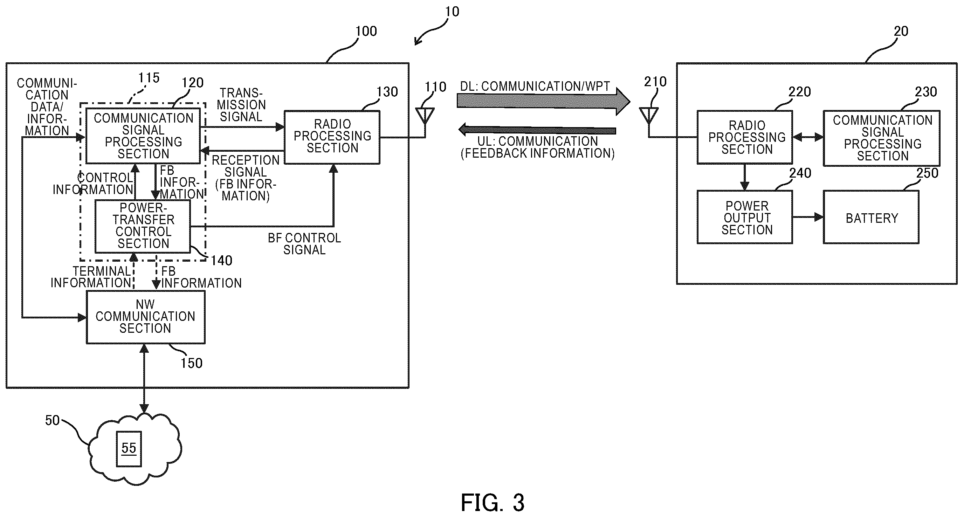

FIG. 3 is a block diagram showing an example of main configuration of the base station 10 and the terminal apparatus (UE) 20 that constitute a system to which the wireless-power transfer feedback control in FIG. 2 can be applied. The base station 10 is provided with a base station apparatus 100 and the antenna 110. The antenna 110 is, for example, an array antenna having a large number of antenna elements as shown in FIGS. 1 and 2. The antenna 110 may be singular or plural. For example, a plurality of the antennas 110 may be disposed corresponding to the plural sector cells.

The base station apparatus 100 is provided with a communication-signal processing section 120, a radio processing section 130, a power-transfer control section 140, and a NW communication section 150. The communication-signal processing section 120 processes signals such as various types of user data and control information, etc. transmitted to and received from the UE 20. The radio processing section 130 transmits the transmission signal generated by the communication-signal processing section 120 from the antenna 110 to the UE 20, and outputs the reception signal received from the UE 20 via the antenna 110 to the communication-signal processing section 120.

The communication control section 115 described above is configured with the communication-signal processing section 120 and the power-transfer control section 140. The power-transfer control section 140 generates control information based on the feedback information from the UE 20 and sends the control information to the communication-signal processing section 120. The power-transfer control section 140 generates the BF control signal based on the control information and sends the signal to the radio processing section 130. The communication-signal processing section 120 generates the downlink (DL) transmission signal including the WPT signal based on the control information received from the power-transfer control section 140, and sends the signal to the radio processing section 130.

The power-transfer control section 140 may transfer the feedback information received from the UE 20 to the NW communication section 150, receive control information generated by the external platform 55 based on the feedback information, from the NW communication section 150, and generate the downlink (DL) transmission signal including the WPT signal and the BF control signal, based on the control information.

The NW communication section 150 is connected to the communication network 50 via a wired or wireless communication line, and can communicate with a cloud system, a server, etc. of the external platform 55. The NW communication section 150 can also transmit communication data or information received from the UE 20 to the communication network 50 side, and also receive communication data or information to be transmitted to the UE 20, from the communication network 50 side.

In particular, in the present embodiment, when performing the downlink communication to the UE 20, the communication-signal processing section 120 generates a downlink transmission signal including a dummy signal for WPT using a communication-unused radio resource that is not used for communication among the plural radio resources. The downlink transmission signal including the dummy signal for WPT can be generated by modulating with any modulation method. For example, the dummy signal for WPT may be a signal modulated at a symbol point having the maximum amplitude among plural symbol points of a digital modulation method. For example, the generation of the transmission signal may include a primary modulation such as QAM (Quadrature Amplitude Modulation), etc. and a secondary modulation such as OFDM (Orthogonal Frequency Division Multiplexing) modulation, etc. The process of including the dummy signal for WPT using the communication-unused radio resource in the transmission signal for downlink communication to the UE 20 may be performed autonomously by the base station 10, or may be performed based on a request or instruction from the UE 20 or a request or instruction from the external platform 55.

In the present embodiment, the radio processing section 130 controls one or more beams formed by the array antenna 110 based on the BF control signal. The radio processing section 130 transmits the downlink transmission signal including the dummy signal for WPT generated by the communication-signal processing section 120, to the UE 20 via the antenna 110.

When performing the downlink communication to the UE 20, the base station 10 may perform a beamforming (BF) control to form an individual beam 10B for each UE 20 or for each UE group in a target area in which plural UEs 20 locate, and may perform a wireless power transfer for each UE 20 or for each UE group. The BF control for each UE 20 or for each UE group may be performed by the digital BF control in the frequency domain in the communication-signal processing section 120, or may be performed by the analog BF control in the radio processing section 130.

In FIG. 3, the UE 20 includes an antenna 210, a radio processing section 220, a communication-signal processing section 230, a power output section 240 and a battery 250. The antenna 210 is, for example, a small-sized array antenna having plural antenna elements. The radio processing section 220 transmits transmission signals such as feedback information and user data, etc. generated by the communication-signal processing section 230, from the antenna 210 to the base station 10, and outputs reception signals received from the base station 10 via the antenna 210, to the communication-signal processing section 230.

In the present embodiment, the radio processing section 220 receives the transmission signal including the dummy signal for WPT transmitted from the base station 10. The power output section 240 has, for example, a rectifier, and outputs an electric power of the reception signal that is obtained by receiving the transmission signal including the dummy signal for WPT from the base station 10 as a reception power for charging the battery. It is possible to charge the battery 250 by the reception power that is output from the power output section 240.

The radio processing section 220 may have a function for measuring or obtaining information regarding the reception power, such as reception-power beam information (for example, information on the direction, width, etc. of the reception power beam) and information on the arrival direction of the WPT radio waves, etc. The power output section 240 may have a function of measuring the reception power. The communication-signal processing section 230 may have a function for generating WPT control information in the base station on the transmission power (Tx) side. At least one of the reception-power beam information, information regarding the reception power such as information on the arrival direction of WPT radio waves, etc., information on the reception power and control information, can be included in the feedback information to the base station 10.

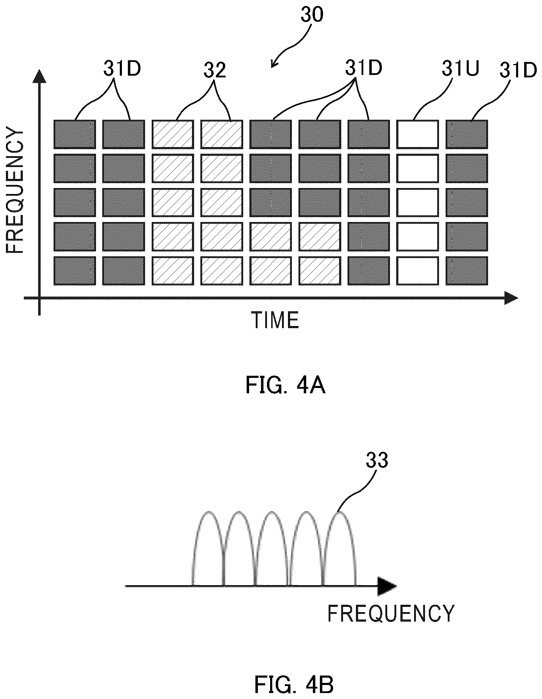

FIG. 4A is an illustration showing an example of allocation of WPT blocks in radio resources (resource blocks) of the transmission signal including the dummy signal for WPT transmitted from the base station 10 according to the present embodiment. FIG. 4B is an illustration showing an example of a spectrum on the frequency axis in the secondary modulation of the OFDM method of the transmission signal transmitted from the base station 10 according to the present embodiment. As shown in FIG. 4A, the plural radio resources used in downlink communications and uplink communications in the system of the present embodiment are plural resource blocks 30 defined by subcarriers on the frequency axis and slots on the time axis. Each of the resource block 30 has subcarriers 33 with predetermined bandwidth, which are orthogonal to each other on the frequency axis as shown in FIG. 4B.

The resource block 30 constituting the radio resources in FIG. 4A include uplink resource blocks 31U and downlink resource blocks 31D and 32. The plural uplink resource blocks 31U are allocated to uplink communication signals of user data and communication signals of the feedback information for WPT. Among the plural downlink resource blocks, a part of the resource blocks 31D is allocated to downlink communication signals of user data and information, and the remaining resource blocks 32, which are cross-hatched in the figure, are allocated as WPT blocks.

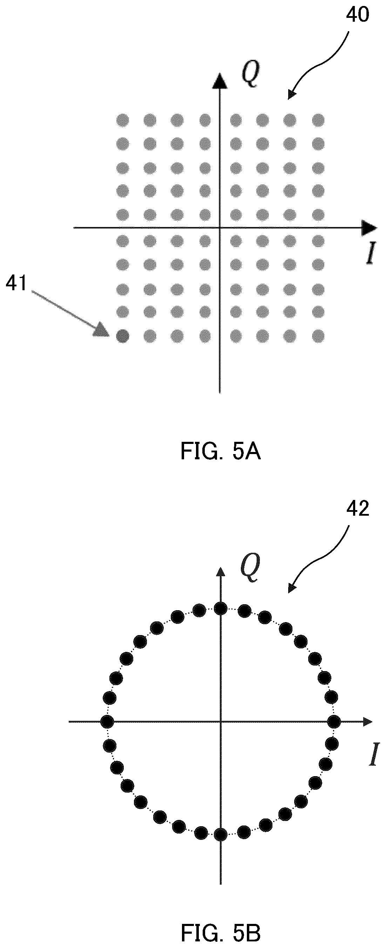

In the present embodiment, in order to amplify the dummy signal for WPT in the high output power and high efficiency range of the power amplifier 131, an OFDM modulated signal having a lower PAPR (peak-to-average power ratio) than the communication signal, as exemplified in FIGS. 5A and 5B, may be used as the dummy signal for WPT.

FIG. 5A is an illustration showing an example of a placement of symbol points 40 in the primary modulation of the QAM method of the transmission signal transmitted from the base station 10 according to the present embodiment. FIG. 5A is a constellation diagram showing the placement of plural symbol points (64-value symbol points) in the case of the 64QAM method, in which the horizontal axis indicates the in-phase channel component and the vertical axis indicates the quadrature channel component. In the present embodiment, a dummy signal for WPT, which is modulated at any symbol point of the plural symbol points 40 in the QAM method, can be used. For example, a dummy signal for WPT modulated by any one or more symbol points 41 on the outermost periphery, which have the maximum amplitude among the plural symbol points 40 in the QAM method, may be used. In this case, the transmission power to the terminal apparatus such as the UE 20, etc. can be maximized. For example, if there is no need to maximize the transmission power, the modulation may be performed at any symbol point other than the symbol point on the outermost periphery. For example, the symbol point used for modulating the dummy signal for WPT may be determined and selected based on the transmission power indicated by the power control information included in the feedback information received from a terminal apparatus such as the UE 20, etc., or the symbol point used for modulating the dummy signal for WPT may be determined and selected based on the reception beam information (for example, the information on the beam direction and beam width), the information on the arrival direction of the WPT radio waves, the battery-remaining charge information or the like included in the reception terminal information received from the terminal apparatus 20 such as the UE 20, etc.

FIG. 5B is an illustration showing another example of a placement of symbol points in the primary modulation of the WPT dummy signal transmitted from the base station 10 according to the present embodiment. As shown in the constellation diagram of FIG. 5B, a dummy signal for WPT, which is composed of an OFDM modulated signal modulated at a symbol point 42 where the phase changes under constant amplitude conditions over time, may be used. The OFDM modulated signal at the symbol point 42 in FIG. 5B can be generated using, for example, codes of the Zadoff-Chu sequence. Even when using the dummy signal for WPT generated by the modulated signal in FIG. 5B, it is possible to maximize the transmission power to the terminal apparatus such as the UE 20, etc. In this case as well, for example, the number of symbol points used for modulating the dummy signal for WPT and the like may be determined and set based on the transmission power indicated by the power control information included in the feedback information received from the terminal apparatus such as the UE 20, etc., or the number of symbol points used for modulating the dummy signal for WPT and the like may be determined and set based on the reception-power beam information (for example, the information on the beam direction and beam width), the information on the arrival direction of the WPT radio waves, the battery-remaining charge information or the like included in the reception terminal information received from the terminal apparatus 20 such as the UE 20, etc.

According to the system in FIGS. 1 to 5, in the downlink communication from the base station 10 to the UE 20, the communication-unused radio resources can be effectively utilized as wireless-power transfer blocks (WPT blocks) to perform the wireless power transfer (WPT) from the base station 10 to the UE 20. In addition, the feedback information such as reception-power terminal information of the UE 20 or the like can be uploaded to the base station 10 using the uplink communication.

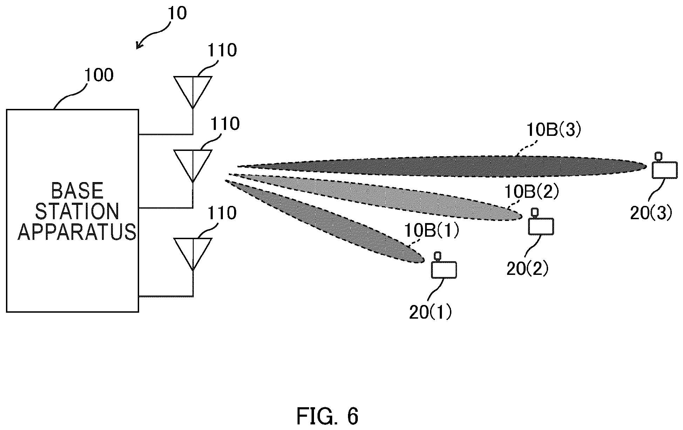

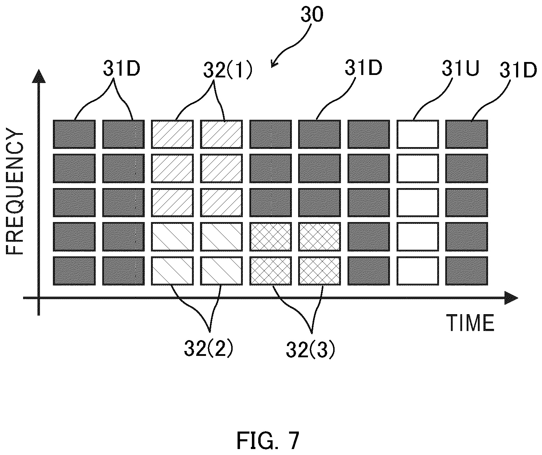

FIG. 6 is an illustration showing an example of a power supply to each UE by beamforming from the base station 10 to plural UEs 20 according to the present embodiment. FIG. 7 is an illustration showing an example of an allocation of WPT blocks when power is supplied to each UE by the beamforming in FIG. 6. FIGS. 6 and 7 show an example in which the plural UEs 20(1) to 20(3) are present in the WPT area 10A' within the communication area 10A (see FIG. 1 described above), and an electric power is supplied to each of the UEs 20(1) to 20(3) via the beams 10B(1) to 10B(3) respectively formed for the UEs.

In FIG. 6, the base station apparatus 100 of the base station 10 performs a beamforming (BF) control for each UE in the communication-signal processing section 120 or the radio processing section 130. The allocation of WPT blocks to each of the UEs 20(1) to 20(3) can be performed, for example, as shown in FIG. 7. In FIG. 7, a part of the plural resource blocks 30 used in mobile communications is used as communication resource blocks 31D to which downlink communication signals are allocated and plural WPT blocks 32(1) to 32(3). The six WPT blocks 32(1) indicated with the first hatching in the figure are used to supply an electric power to the first UE 20(1) via the beam 10B(1), and the four WPT blocks 32(2) indicated with the second hatching are used to supply an electric power to the second UE 20(2) via the beam 10B(2). The four WPT blocks 32(3) indicated by cross-hatching in the figure are used to supply an electric power to the third UE 20(3) via the beam 10B(3). The remaining part of the resource blocks 30 is used as resource blocks for communication 31U to which uplink communication signals are allocated.

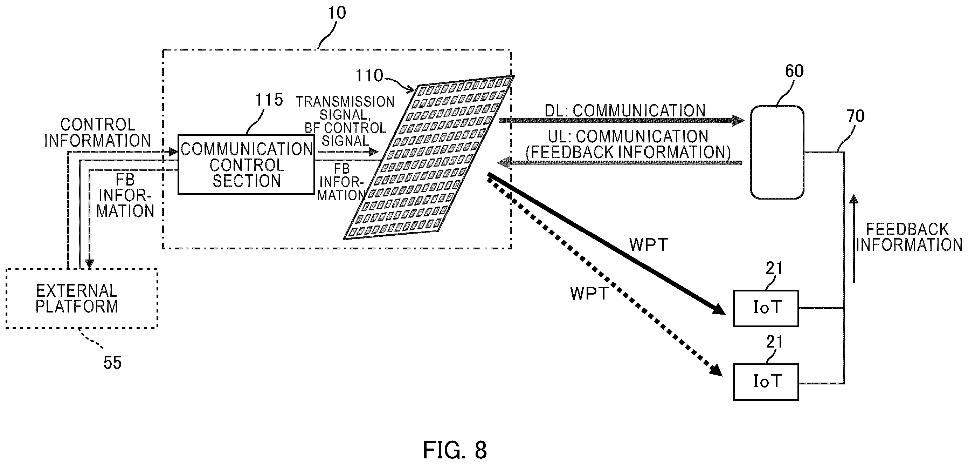

FIG. 8 is an illustration showing an example of a wireless-power transfer feedback control via a communication UL in a system according to another embodiment. It is noted that in FIG. 8, the description of the same parts as those in FIG. 2 described above is omitted. In the example of FIG. 8, the terminal apparatus of power-supply target is an IoT device (slave repeater) 21 connected to a relay apparatus (master repeater) 60 that relays a communication with the base station 10. The relay apparatus (master repeater) 60 is a mobile station (UE) or the like of a mobile communication system that can perform a radio communication with the base station 10. The IoT device (slave repeater) 21 and the relay apparatus (master repeater) 60 are connected, for example, by a wired or wireless communication path 70 so as to enable a transmission and reception of data and information. The wired communication path is, for example, a LAN cable such as Ethernet (registered trademark), etc. The wireless communication path is, for example, a wireless communication path such as Bluetooth (registered trademark) such as BLE, etc., a wireless LAN such as Wi-Fi (registered trademark), etc., ZigBee (registered trademark) or the like. Feedback information including reception-power terminal information of the IoT device 21, which is a terminal apparatus of power-supply target, is sent to the relay apparatus 60 via the communication path 22, and is transferred from the relay apparatus 60 to the base station 10 via an UL communication.

In FIG. 8, the feedback information transmitted from the reception power (Rx) side to the base station 10 may include reception-power terminal information regarding a reception power in the IoT device (terminal apparatus) 21. This reception-power terminal information includes, for example, at least one of the following information: request information (WPT request) requesting a wireless power transfer to the IoT device 21, identification information capable of identifying the IoT device 21, location information of the IoT device 21, reception power information in the IoT device 21, reception-power beam information in the IoT device 21 (for example, information on the direction and width of the reception power beam, etc.), information on the arrival direction of the WPT radio waves in the IoT device 21, remaining-charge information of a battery provided in the IoT device 21, and approval information approving a wireless power transfer to the IoT device 21. Herein, the information on the direction of the reception power beam is, for example, information on the azimuth of the antenna reception beam (the main beam in the antenna directivity characteristics) with respect to the horizontal plane passing through the antenna of the IoT device 21, and information on the zenith angle or elevation angle of the antenna reception beam. The information on the arrival direction of the WPT radio waves is information on the azimuth of the arrival direction of the WPT radio waves with respect to the horizontal plane passing through the antenna of the IoT device 21, and information on the zenith angle or elevation angle of the arrival direction.

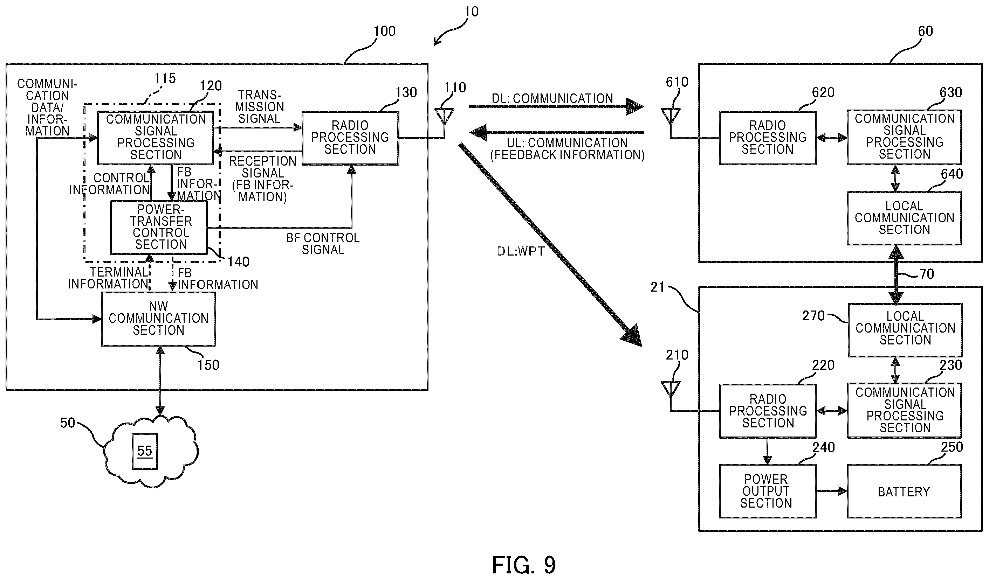

FIG. 9 is a block diagram showing an example of configuration of the base station, the relay apparatus and the terminal apparatus that constitute the system capable of applying the wireless-power transfer feedback control in FIG. 8. It is noted that in FIG. 9, the description of the same parts as those in FIG. 3 described above is omitted.

In FIG. 9, the IoT devices 21 as one or plural terminal apparatuses are connected to the relay apparatus 60 via the wired or wireless communication path 70. The IoT device 21 is provided with a local communication section 270 for communicating with the relay apparatus 60 to transmit and receive the information via the wired or wireless communication path 70.

The relay apparatus 60 includes an antenna 610, a radio processing section 620, a communication-signal processing section 630 and a local communication section 640. The antenna 610 is, for example, a small-sized array antenna having plural antenna elements. The radio processing section 620 transmits transmission signals such as user data generated by the communication-signal processing section 230 and feedback information received from the IoT device 21, etc. from the antenna 610 to the base station 10, and outputs reception signals received from the base station 10 via the antenna 610 to the communication-signal processing section 630. The local communication section 640 transmits and receives the information to and from the IoT device 21 via the wired or wireless communication path 70.

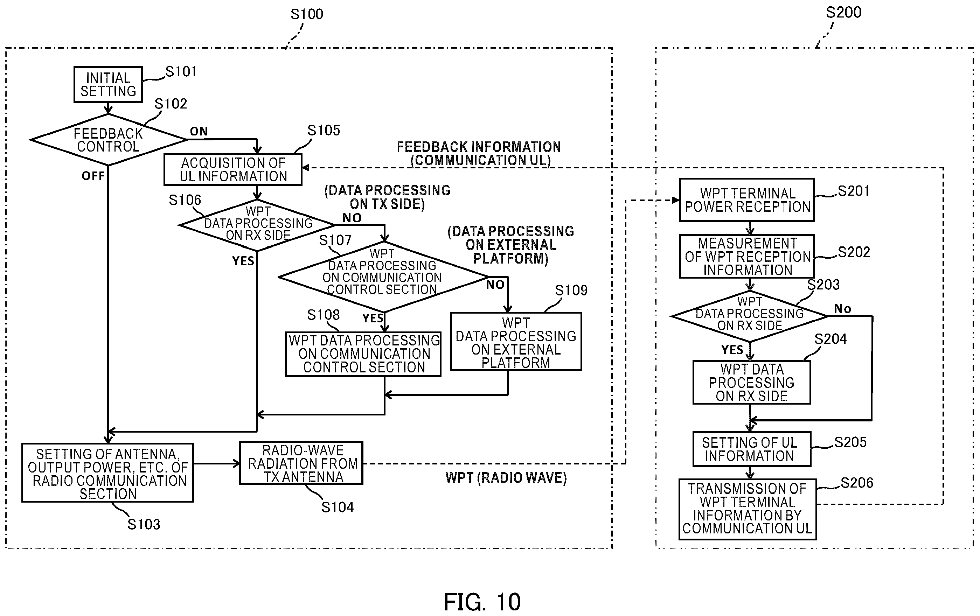

FIG. 10 is a flowchart showing an example of a wireless-power transfer feedback control in the system according to the embodiment. It is noted that in FIG. 10, the Tx side includes the base station 10 (particularly, the communication control section 115). Further, the Rx side includes the UE 20 of power-supply target (see FIG. 2 and FIG. 3), or includes the relay apparatus 60 and the IoT device 21 of power-supply target. Furthermore, the wireless-power transfer feedback control in FIG. 10 corresponds to each of the following cases: the case where the process of generating the control information used in the communication control section 115 of the base station 10 (hereinafter also referred to as "WPT data processing") is performed on the Rx side, the case where the WPT data processing is performed on the communication control section 115 of the Tx side, and the case where the WPT data processing is performed on the external platform 55.

In FIG. 10, the wireless-power transfer feedback control includes a control flow on the Tx side (S100) and a control flow on the Rx side (S200). In the control flow on the Tx side (S100), first, the Tx side performs an initial setting to set control conditions of wireless power transfer (for example, direction of the WPT beam, output power, distribution of antenna elements used for WPT of the transmission antenna, and allocation of WPT blocks) to initial conditions and initial values (S101).

Next, when the feedback control is not performed (OFF in S102), the Tx side controls the radio processing section 130 of the base station 10 under the initial setting control conditions (S103), generates a transmission signal including the dummy signal for WPT, and radiates WPT radio waves from the antenna 110 of the base station 10 to the terminal apparatus 20, 21 of power-supply target on the Rx side (S104).

On the other hand, when the feedback control is performed (ON in S102), the Tx side receives and obtains the feedback information from the Rx side via the communication UL of the mobile communication (S105). Herein, in the case that the WPT data processing is performed on the Rx side and the control information (hereinafter referred to as "WPT control information") generated by the WPT data processing on the Rx side is included in the feedback information (YES in S106), the Tx side controls the radio processing section 130 of the base station 10 under the control conditions that are set based on the WPT control information on the Rx side (S103), generates a transmission signal including the dummy signal for WPT, and radiates WPT radio waves from the antenna 110 of the base station 10 to the terminal apparatus 20, 21 of power-supply target on the Rx side (S104).

In the case that the WPT data processing is not performed on the Rx side (No in S106) and the WPT data processing is performed on the Tx side (YES in S107), the Tx side performs the WPT data processing for the corresponding terminal apparatus based on the reception terminal information (hereinafter referred to as "WPT terminal information") included in the feedback information received from the Rx side, and generates the WPT control information (S108). The Tx side controls the radio processing section 130 of the base station 10 under the control conditions that are set based on the WPT control information generated by the WPT data processing (S103), generates a transmission signal including the dummy signal for WPT, and radiates WPT radio waves from the antenna 110 of the base station 10 to the terminal apparatus 20, 21 of power-supply target on the Rx side (S104).

In the case that the WPT data processing is not performed on the Rx side (No in S106) and the WPT data processing is performed on the external platform 55 (No in S107), the Tx side transfers the feedback information received from the Rx side to the external platform 55. The external platform 55 performs the WPT data processing for the corresponding terminal apparatus based on the WPT terminal information included in the feedback information, and generates the WPT control information (S109). The Tx side receives the WPT control information generated by the WPT data processing from the external platform 55, controls the radio processing section 130 of the base station 10 under the control conditions that are set based on the WPT control information (S103), generates a transmission signal including the dummy signal for WPT, and radiates WPT radio waves from the antenna 110 of the base station 10 to the terminal apparatus 20, of power-supply target on the Rx side (S104).

In the control flow on the Rx side (S200), first, the terminal apparatus on the Rx side (hereinafter also referred to as "WPT terminal") receives the WPT radio waves radiated from the Tx side to receive an electric power (S201), and measures the WPT reception power information (S202). The WPT reception power information becomes a part of the WPT terminal information to be included in the feedback information to the Tx side.

Herein, in the case that the WPT data processing is performed on the Rx side (YES in S203), the Rx side performs the WPT data processing and generates the WPT control information (S204). The WPT control information becomes a part of the WPT terminal information and is included in the feedback information. On the other hand, in the case that the Rx side does not perform the WPT data processing (NO in S203), the Rx side does not perform the WPT data processing, and the WPT control information is not included in the feedback information.

Next, the Rx side sets the feedback information including the WPT terminal information, in the information of the communication uplink (communication UL) for the base station 10 on the Tx side (S205).

It is noted that, in the wireless-power transfer feedback control of the embodiment, in the case that the WPT terminal information of the feedback information received from the Rx side includes the reception power information, the power-transfer control section 140 of the base station 10 may control the number of dummy signals for WPT or the transmission power, based on the reception power information. For example, in the case that the reception power is low, the number of dummy signals for WPT included in the transmission signal may be controlled to be increased or the transmission power may be controlled to be increased, and in the case that the reception power is high, the number of dummy signals for WPT included in the transmission signal may be controlled to be decreased or the transmission power may be controlled to be decreased.

Further, in the wireless-power transfer feedback control of the embodiment, in the case that the WPT terminal information of the feedback information received from the Rx side includes the reception-power beam information (beam direction, beam width), the power-transfer control section 140 of the base station 10 may control the number of dummy signals for WPT or the transmission power, based on the reception beam information. For example, in the case that the angular difference between the direction of the reception power beam (the main beam in the antenna directivity characteristics) and the antenna direction of the base station with respect to the terminal apparatus 20, 21 is equal to or greater than a predetermined angle, the number of dummy signals for WPT included in the transmission signal may be controlled to be increased or the transmission power may be controlled to be increased. In the case that the angular difference between the direction of the reception power beam and the antenna direction of the base station is less than the predetermined angle, the number of dummy signals for WPT included in the transmission signal may be controlled to be decreased or the transmission power may be controlled to be decreased.

Furthermore, in the wireless-power transfer feedback control of the embodiment, in the case that the WPT terminal information of the feedback information received from the Rx side includes the information on the arrival direction of WPT radio waves, the power-transfer control section 140 of the base station 10 may control the number of dummy signals for WPT or the transmission power, based on the information on the arrival direction of WPT radio waves. For example, in the case that the angular difference between the arrival direction of the WPT radio waves and the direction of the reception power beam (main beam in the antenna directional characteristics) measured in advance with respect to the terminal apparatus 20, 21 is equal to or greater than a predetermined angle, the number of dummy signals for WPT included in the transmission signal may be controlled to be increased or the transmission power may be controlled to be increased. In the case that the angle difference between the arrival direction of the WPT radio waves and the direction of the reception power beam is less than the predetermined angle, the number of dummy signals for WPT included in the transmission signal may be controlled to be decreased or the transmission power may be controlled to be decreased.

Moreover, in the wireless-power transfer feedback control of the embodiment, in the case that the feedback information received from the Rx side includes the WPT request, the base station 10 on the Tx side may start controlling the wireless power transfer to the terminal apparatus 20, 21 on the Rx side using the WPT request as a trigger.

Further, in the wireless-power transfer feedback control of the embodiment, in the case that the WPT terminal information of the feedback information received from the Rx side includes the identification information of the terminal apparatus 20, 21, the power-transfer control section 140 of the base station 10 on the Tx side may refer to a terminal database based on the identification information and determine whether the terminal apparatus 20, 21 transmitting the WPT request is a terminal apparatus to be subjected to the wireless power transfer or an authorized terminal apparatus, and may control so as to include the dummy signal for WPT in the transmission signal only if the determination is positive.

Furthermore, in the wireless-power transfer feedback control of the embodiment, in the case that the WPT terminal information includes the location information of the terminal apparatus 20, 21, the power-transfer control section 140 of the base station 10 may control, based on the location information, so that the dummy signal for WPT is included in the transmission signal only when the terminal apparatus 20, 21 is located in a pre-authorized area.

Moreover, in the wireless-power transfer feedback control of the embodiment, in the case that the WPT terminal information includes the remaining-charge information of the batteries 250 of the terminal apparatus 20, 21, the power-transfer control section 140 of the base station 10 may control, based on the remaining charge information, to increase the number of dummy signals for WPT to be included in the transmission signal when the remaining charge amount of the batteries 250 is low, and to decrease the number of dummy signals for WPT to be included in the transmission signal when the remaining charge amount of the batteries 250 is high.

In addition, in the wireless-power transfer feedback control of the embodiment, in the case that the WPT terminal information includes the approval information for the terminal apparatus 20, 21, the power-transfer control section 140 of the base station 10 may control, based on the approval information, to include the dummy signal for WPT in the transmission signal only if the terminal apparatus 20, 21 is a terminal apparatus approved in advance.

As described above, according to the present embodiment, it is possible to appropriately control the wireless power transfer from the base station 10 to the terminal apparatus 20, 21, based on feedback information such as the reception-power terminal information, etc. regarding the wireless power transfer in the terminal apparatus (UE 20, IoT device 21).

Further, according to the present embodiment, since the feedback information from the terminal apparatus 20, 21 can be fed back via the communication UL toward the base station 10, there is no need to provide a separate feedback line toward the base station 10.

Furthermore, according to the present embodiment, for each of the plural terminal apparatuses 20, 21, by dynamically controlling the power supply from the base station 10 to the terminal apparatuses 20, 21 based on feedback information of the terminal apparatuses 20, 21, the power supply can be efficiently performed through the wireless power transfer from the base station 10 depending on the state of power-receiving side (for example, the position of the terminal apparatus, the reception power, the direction of the reception power beam, the remaining charge of battery, etc.).

In particular, in the present embodiment, in the case that the control information for wireless power transfer used by the base station 10 is determined and generated by the external platform 55, the terminal apparatus 20, 21 that is a target of beamforming for wireless power transfer and the beam direction can be determined based on the terminal approval information and the movement prediction of the terminal apparatus 20, 21, making it possible to perform an advanced wireless-power transfer control.

In particular, in the present embodiments, when the control information for wireless power transfer used by the base station 10 is determined and generated by the base station 10, making it possible to perform wireless-power transfer control with excellent real-time performance.

In particular, in the present embodiment, in the case that the control information for wireless power transfer used by the base station 10 is determined and generated by the terminal apparatus 20, 21 and transmitted to the base station 10 as the feedback information, the amount of information in the uplink (UL) feedback information can be reduced.

Furthermore, according to the present embodiment, it is possible to supply an electric power to the terminal apparatus 20, 21 by utilizing radio resources that are not used in communication between the base station 10 and the terminal apparatus 20, 21.

In addition, since the present invention can provide a power supply infrastructure that can supply an electric power to a large number of terminal apparatuses 20, 21 capable of receiving radio waves transmitted from the base station 10, it is possible to contribute to achieving Goal 9 of the Sustainable Development Goals (SDGs), which is to "Create a foundation for industry and technological innovation".

It is noted that, the process steps and configuration elements of the system, the terminal apparatus (UE, IoT device), the base station, the mobile station, the relay apparatus and the control apparatus described in the present description can be implemented with various means. For example, these process steps and configuration elements may be implemented with hardware, firmware, software, or a combination thereof.

With respect to hardware implementation, means such as processing units or the like used for establishing the foregoing steps and configuration elements in entities (for example, various kinds of radio communication apparatuses, base station apparatus (Node B, Node G), terminal apparatus, hard disk drive apparatus, or optical disk drive apparatus) may be implemented in one or more of an application-specific IC (ASIC), a digital signal processor (DSP), a digital signal processing apparatus (DSPD), a programmable logic device (PLD), a field programmable gate array (FPGA), a processor, a controller, a microcontroller, a microprocessor, an electronic device, other electronic unit, computer, or a combination thereof, which are designed so as to perform a function described in the present specification.

With respect to the firmware and/or software implementation, means such as processing units or the like for using to establish the foregoing configuration elements may be implemented with a program (for example, code such as procedure, function, module, instruction, etc.) for performing a function described in the present specification. In general, any computer/processor readable medium of materializing the code of firmware and/or software may be used for implementation of means such as processing units and so on for establishing the foregoing steps and configuration elements described in the present specification. For example, in a control apparatus, the firmware and/or software code may be stored in a memory and executed by a computer or processor. The memory may be implemented within the computer or processor, or outside the processor. Further, the firmware and/or software code may be stored in, for example, a medium capable being read by a computer or processor, such as a random-access memory (RAM), a read-only memory (ROM), a non-volatility random-access memory (NVRAM), a programmable read-only memory (PROM), an electrically erasable PROM (EEPROM), a FLASH memory, a floppy (registered trademark) disk, a compact disk (CD), a digital versatile disk (DVD), a magnetic or optical data storage unit, or the like. The code may be executed by one or more of computers and processors, and a certain aspect of functionalities described in the present specification may by executed by a computer or processor.

The medium may be a non-transitory recording medium. Further, the code of the program may be executable by being read by a computer, a processor, or another device or an apparatus machine, and the format is not limited to a specific format. For example, the code of the program may be any of a source code, an object code, and a binary code, and may be a mixture of two or more of those codes.

The description of embodiments disclosed in the present specification is provided so that the present disclosures can be produced or used by those skilled in the art. Various modifications of the present disclosures are readily apparent to those skilled in the art and general principles defined in the present specification can be applied to other variations without departing from the spirit and scope of the present disclosures. Therefore, the present disclosures should not be limited to examples and designs described in the present specification and should be recognized to be in the broadest scope corresponding to principles and novel features disclosed in the present specification.

### REFERENCE SIGNS LIST

10: base station
10A: communication area
10A': WPT area
10B: beam
20: terminal apparatus (UE)
21: terminal apparatus (IoT device)
30: resource block
31D: resource block for communication (downlink)
31U: resource block for communication (uplink)
32: WPT block (block for wireless power transfer)
33: subcarrier
40: symbol point
41: symbol point
50: communication network
55: external platform
60: terminal apparatus as relay apparatus (mobile station, UE)
70: wired or wireless communication path
100: base station apparatus
110: antenna (array antenna)
115: communication control section
120: communication-signal processing section
130: radio processing section
140: power-transfer control section
210: antenna (array antenna)
230: communication-signal processing section
240: power output section
250: battery
260: IoT device (built-in)

## Claims

1. A system for performing a wireless power transfer from a base station,
wherein the base station comprises:
a communication control section that obtains feedback information from a terminal apparatus of power-supply target via an uplink of mobile communication, and generates a transmission signal including a signal for wireless power transfer and a control signal of beamforming for wireless power transfer from an antenna of the base station, based on control information generated based on the feedback information; and
a radio processing section that controls a beam for wireless power transfer from the antenna based on the control signal, and transmits the transmission signal including the signal for wireless power transfer to the terminal apparatus via the beam for wireless power transfer from the antenna, and
wherein the terminal apparatus comprises:
a radio processing section that receives the transmission signal including the signal for wireless power transfer transmitted from the base station; and
a power output section that outputs an electric power of a reception signal that is obtained by receiving the transmission signal including the signal for wireless power transfer, as a reception power.

2. The system according to claim 1,
wherein the base station and the terminal apparatus are capable of performing a radio communication with each other via an uplink of mobile communication, and
wherein the base station receives the feedback information directly from the terminal apparatus via an uplink between the terminal apparatus and the base station.

3. The system according to claim 1,
wherein the system comprises a relay apparatus that is connected to the terminal apparatus via a wired or wireless communication path and is capable of performing a radio communication with the base station via an uplink of mobile communication, and
wherein the base station receives the feedback information via an uplink between the relay apparatus and the base station.

4. The system according to claim 1,
wherein the feedback information includes power-receiving terminal information regarding a power reception in the terminal apparatus, and
wherein the base station generates the control information based on the power-receiving terminal information included in the feedback information.

5. The system according to claim 1,
wherein the feedback information includes power-receiving terminal information regarding a power reception in the terminal apparatus, and
wherein the base station:
transfers the feedback information including the power-receiving terminal information to an external platform; and
receives the control information from the external platform that generates the control information based on the power-receiving terminal information included in the feedback information.

6. The system according to claim 1,
wherein the feedback information includes the control information generated by the terminal apparatus based on power-receiving terminal information regarding a power reception in the terminal apparatus.

7. The system according to any one of claims 4 to 6,
wherein the power-receiving terminal information includes at least one of request information for requesting a wireless power transfer to the terminal apparatus, identification information capable of identifying the terminal apparatus, position information of the terminal apparatus, reception-power information in the terminal apparatus, information on a reception-power beam in the terminal apparatus, information on an arrival direction of a radio wave of wireless power transfer in the terminal apparatus, remaining charge information of a battery provided in the terminal apparatus, and approval information for approving a wireless power transfer to the terminal apparatus.

8. The system according to any one of claims 1 to 6,
wherein the base station:
generates a transmission signal including the signal for wireless power transfer for each of plural terminal apparatuses; and
transmits the transmission signal including the signal for wireless power transfer using plural beams that are different for each of the terminal apparatuses.

9. A base station capable of performing a radio communication with a terminal apparatus of power-supply target, comprising:
a communication control section that obtains feedback information from a terminal apparatus via an uplink of mobile communication, and generates a transmission signal including a signal for wireless power transfer and a control signal of beamforming for wireless power transfer from an antenna of the base station, based on control information generated based on the feedback information; and
a radio processing section that controls a beam for wireless power transfer from the antenna based on the control signal, and transmits the transmission signal including the signal for wireless power transfer to the terminal apparatus via the beam for wireless power transfer from the antenna.

10. The base station according to claim 9,
wherein the base station is capable of performing a radio communication with the terminal apparatus via an uplink of mobile communication; and
wherein the base station comprises means for directly receiving the feedback information from the terminal apparatus via an uplink between the terminal apparatus and the base station.

11. The base station according to claim 9,
wherein the base station is capable of performing a radio communication with a relay apparatus connected to the terminal apparatus via a wired or wireless communication path via an uplink of mobile communication; and
wherein the base station comprises means for receiving the feedback information via an uplink between the relay apparatus and the base station.

12. The base station according to claim 9,
wherein the feedback information includes power-receiving terminal information regarding a power reception in the terminal apparatus, and
wherein the base station comprises means for generating the control information based on the power-receiving terminal information included in the feedback information.

13. The base station according to claim 9,
wherein the feedback information includes power-receiving terminal information regarding a power reception in the terminal apparatus, and
wherein the base station comprises:
means for transferring the feedback information including the power-receiving terminal information to an external platform; and
means for receiving the control information from the external platform that generates the control information based on the power-receiving terminal information included in the feedback information.

14. The base station according to claim 9,
wherein the feedback information includes the control information generated by the terminal apparatus based on power-receiving terminal information regarding a power reception in the terminal apparatus.

15. The base station according to any one of claims 12 to 14,
wherein the power-receiving terminal information includes at least one of request information for requesting a wireless power transfer to the terminal apparatus, identification information capable of identifying the terminal apparatus, position information of the terminal apparatus, reception-power information in the terminal apparatus, information on a reception-power beam in the terminal apparatus, information on an arrival direction of a radio wave of wireless power transfer in the terminal apparatus, remaining charge information of a battery provided in the terminal apparatus, and approval information for approving a wireless power transfer to the terminal apparatus.

16. The base station according to any one of claims 9 to 14,
wherein the base station comprises:
means for generating a transmission signal including the signal for wireless power transfer for each of plural terminal apparatuses; and
means for transmitting the transmission signal including the signal for wireless power transfer using plural beams different for each of the terminal apparatuses.

17. A terminal apparatus capable of performing a radio communication with a base station, comprising:
a radio processing section that transmits feedback information regarding a wireless power transfer to the base station via an uplink of mobile communication and receives a transmission signal including a signal for wireless power transfer transmitted from the base station; and
a power output section that outputs an electric power of a reception signal that is obtained by receiving the transmission signal including the signal for wireless power transfer, as a reception power.

18. The terminal apparatus according to claim 17,
wherein the feedback information includes control information generated by the terminal apparatus based on power-receiving terminal information regarding a power reception in the terminal apparatus.

19. A method for performing a wireless power transfer from a base station, comprising:
obtaining feedback information from a terminal apparatus of power-supply target via an uplink of mobile communication, and generating a transmission signal including a signal for wireless power transfer and a control signal of beamforming for wireless power transfer from an antenna of the base station, based on control information generated based on the feedback information, by the base station;
controlling a beam for wireless power transfer from the antenna based on the control signal, and transmitting the transmission signal including the signal for wireless power transfer to the terminal apparatus via a beam for wireless power transfer from the antenna, by the base station;
receiving the transmission signal including the signal for wireless power transfer transmitted from the base station, by the terminal apparatus; and
outputting an electric power of a reception signal that is obtained by receiving the transmission signal including the signal for wireless power transfer, as a reception power.

20. A program executed by a computer or processor provided in a base station capable of performing a radio communication with a terminal apparatus, the program comprising:
a program code for obtaining feedback information regarding a wireless power transfer of the terminal apparatus, from a terminal apparatus of power-supply target via an uplink of mobile communication, and generating a transmission signal including a signal for wireless power transfer and a control signal of beamforming for wireless power transfer from an antenna of the base station, based on control information generated based on the feedback information; and
a program code for controlling a beam for wireless power transfer from the antenna based on the control signal, and transmitting the transmission signal including the signal for wireless power transfer to the terminal apparatus via a beam for wireless power transfer from the antenna.

21. A program executed by a computer or processor provided in a terminal apparatus capable of performing a radio communication with a base station, including:
a program code for transmitting feedback information regarding a wireless power transfer to the base station via an uplink of mobile communication and receiving a transmission signal including a signal for wireless power transfer transmitted from the base station; and
a program code for outputting an electric power of a reception signal that is obtained by receiving the transmission signal including the signal for wireless power transfer, as a reception power.
